# EUROPEAN PATENT APPLICATION

(11) **EP 2 412 651 A1**
(43) Date of publication of application: **01.02.2012**
(21) Application number: 10425258.0
(22) Date of filing: 29.07.2010
(51) Int. Cl.: B65G 47/84, B65B 3/02

(54) **Transferring star-wheel, bottling plant and method for transferring parisons and containers**

(71) Applicant: Gea Procomac S.p.A., 43038 Sala Baganza (PR) (IT)
(72) Inventor: Dordoni, Claudio, 43126 Parma (IT); Troadec, Bernard, 44210 Pornic (FR)
(74) Representative: Gotra, Stefano

(57) **Abstract**

Transferring star-wheel (1) characterised in that it comprises:
first gripping means (2) operatively active on parisons or unprocessed containers (4) and second gripping means (3) operatively active on moulded or processed containers (5), said star-wheel (1) being approachable to a processing station (101) so that said first gripping means (2) deliver the parisons or the unprocessed containers (4) to said processing station (101) and said second gripping means (3) draw the moulded or the processed containers (5) from said processing station (101).

## Description

The present invention relates to a transferring star-wheel, to a bottling plant and to a method for transferring parisons and containers, in particular to be employed in the bottling sector.

As it is well known, a bottling plant is formed by a plurality of machines (or stations) able to perform as many operations on parisons or containers. For example, with reference to plastic parisons/containers, a bottling plant may comprise:
- a machine for sterilizing the parisons;
- a machine for heating the parisons;
- a blow-moulding machine for moulding containers obtained from the parisons;
- a machine for sterilizing the containers (in alternative to the machine for sterilizing the parisons);
- a machine for filling the containers;
- a machine for applying caps upon the containers;
- a machine for applying labels on the containers.

The above-listed processing machines, either linear or rotary, are linked together by means of a plurality of transferring machines.

For example, a first transferring star-wheel is employed to transfer parisons from the heating machine to a blow-moulding rotary carousel. A second transferring star-wheel is employed to transfer the moulded containers from the blow-moulding rotary carousel to the filling machine.

Indeed, the first transferring star-wheel is provided with several seats accomodating as many grippers for pinching the parisons from the heating machine. When a gripper approaches the heating machine, its speed decreases in order to adapt to the speed and pitch of said heating machine. The speed of the gripper coincides with the speed of the heating machine for a finite time interval so as to allow drawing a parison from the heating machine. When the gripper approaches the blow-moulder, its speed increases in order to adapt to the speed and pitch of said blow-moulder. The speed of the gripper coincides with the speed of the blow-moulder for a finite time interval so that the parison may be inserted inside an open mould and blocked therein. Then, the gripper disengages from the mould and, rotating integrally to the first transferring star-wheel, it approaches the heating machine once again. In substance, the speed of the first transferring star-wheel is constant, while the speed of each gripper is adjustable thanks to a predefined configuration of the arm bearing the gripper and to the employment of a cam.

The second transferring star-wheel is provided with several seats accomodating as many grippers for pinching the moulded containers from the blow-moulder. When a gripper approaches the blow-moulder, its speed increases in order to adapt to the speed and pitch of said blow-moulder. The speed of the gripper coincides with the speed of the blow-moulder for a finite time interval so as to allow drawing the moulded container. When the gripper approaches the filling machine, its speed decreases in order to adapt to the speed and pitch of said filling machine. The speed of the gripper coincides with the speed of the filling machine for a finite time interval so that the moulded container is transferred to the filling machine. Then, rotating integrally to the second transferring star-wheel, the gripper approaches the blow-moulder once again. In substance, the speed of the second transferring star-wheel is constant, while the speed of each gripper is adjustable thanks to a predefined configuration of the arm bearing the gripper and to the employment of a cam.

The main drawback of the above-cited solution is linked to the fact that each transferring star-wheel serves to perform on a processing machine only operations of the same type. Indeed, each transferring star-wheel performs on a first processing machine only "drawing operations". On a second processing machine, the same transferring star-wheel performs only "delivering operations". For example, for delivering parisons to the blow-moulding carousel and for drawing moulded containers from said blow-moulding carousel, two different transferring star-wheels are employed since two different types of operations (delivering and drawing) are performed.

It must be pointed out that the dimensions of each transferring star-wheel is linked to the number of grippers accomodated thereon. The higher is the diameter of the transferring star-wheels, the higher is the relative distance bewteen two adjacent star-wheels. Indeed, the star-wheels must be spaced apart in order not to interfere with each other. Moreover, the distance between the transferring star-wheels is linked to the dead angle of the processing machine (i.e. blow-moulding machine). Indeed, an increase in the dead angle produces a decrease in the yeld of the blow-moulding process.

In this context, the technical task at the basis of the present invention is to provide a transferring star-wheel, a bottling plant and a method for transferring parisons and containers, which overcome the drawbacks of the above mentioned known art.

In particular, it is an object of the present invention to provide a transferring star-wheel that is versatile so as to simplify the whole structure of a bottling plant.

Another object of the present invention is to make available a transferring star-wheel, a bottling plant and a method for transferring parisons and containers that allow to increase the yeld of the bottling process. Another object of the present invention is to make available a transferring star-wheel and a bottling plant that are compact.

Further characteristics and advantages of the present invention will become more apparent from the following approximate, and hence non-restrictive, description of a preferred, but non exclusive, embodiment of a transferring star-wheel, of a bottling plant and of a method for transferring parisons and containers, as illustrated in the appended drawings, in which:
- figure 1 illustrates a first embodiment of a transferring star-wheel, according to the present invention, in plant;
- figures 2 and 3 illustrate a second embodiment of the transferring star-wheel of figure 1, respectively in plant and in perspective view;
- figure 4 illustrates a bottling plant, according to the present invention, in plant;
- figures 5 and 6 illustrate the bottling plant of figure 4 in two different time instants, in plant.

With reference to the figures, 1 indicates a transferring star-wheel, in particular belonging to a bottling plant 100. The star-wheel 1 comprises first gripping means 2 and second gripping means 3. In particular, the first gripping means 2 are operatively active on parisons or unprocessed containers 4. On the other side, the second gripping means 3 are operatively active on moulded or processed containers 5. Advantageously, the first gripping means 2 grip the parisons or unprocessed containers 4 by their neck or by their body. Indeed, no intermediate members like neck-shaped supports are used to bear the parisons or unprocessed containers 4. Analogously, the second gripping means 3 grip the moulded or processed containers 5 by their neck or by their body. Indeed, no intermediate members like neck-shaped supports are used to bear the moulded or processed containers 5.

Preferably, the first gripping means 2 are arranged on the star-wheel 1 so as to alternate with said second gripping means 3. In particular, both first gripping means 2 and second gripping means 3 are hinged to the star-wheel 1 so that they can pivot around corresponding axis 6. The development of the first gripping means 2 or of the second gripping means 3 is extendable so that, with the star-wheel 1 in rotary motion, they define a closed profile (i.e. a cam profile). For example, the first gripping means 2 or the second gripping means 3 comprise telescopic arms 9. In alternative, the first gripping means 2 or the second gripping means 3 have a pantograph structure.

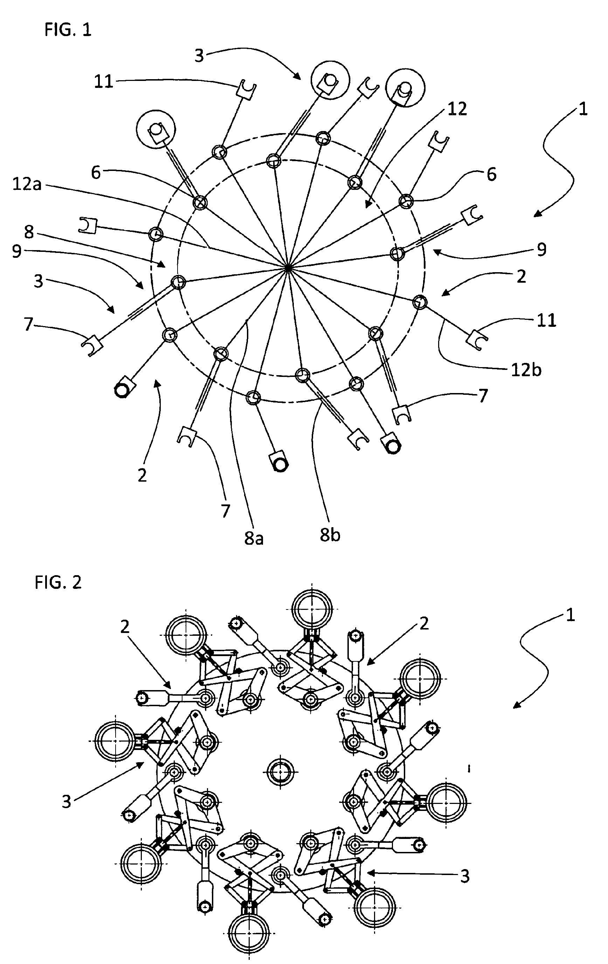

In a first embodiment, illustrated in figure 1, the development of the second gripping means 3 is extendable, while the first gripping means 2 have a constant development. Indeed, the second gripping means 3 comprise a plurality of grippers 7 mounted on as many supporting elements 8. Each supporting element 8 consists in a first portion 8a developing radially across the star-wheel 1 and integral to the latter, and a second portion 8b hinged to the first portion 8a at the corresponding axis 6 and swivelling around the latter. The second portion 8b bears the corresponding gripper 7 and consists in said telescopic arms 9. The first gripping means 2 comprise a plurality of grippers 11 mounted on as many supporting elements 12. Each supporting element 12 consists in a first portion 12a developing radially across the star-wheel 1 and integral to the latter, and a second portion 12b hinged at the first portion 12a at the corresponding axis 6 and swivelling around the latter. The second portion 12b bears the corresponding gripper 11. The supporting elements 12 of the first gripping means 2 are arranged alternately with respect to the supporting elements 8 of the second gripping means 3 across the star-wheel 1.

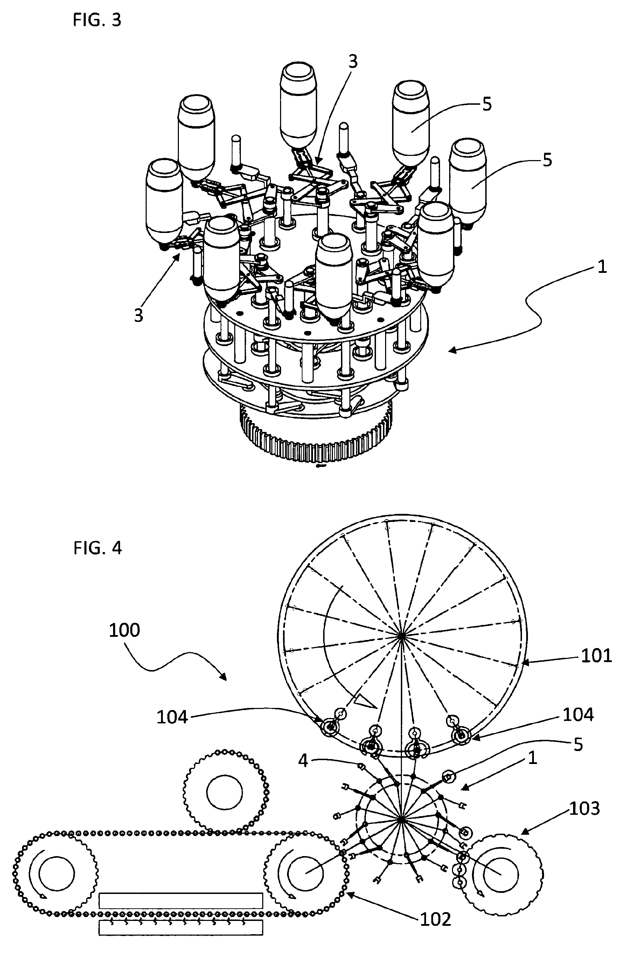

In a second embodiment, illustrated in figures 2 and 3, the second gripping means 3 have a pantograph structure. Originally, the star-wheel 1 is approachable to a processing station 101 so that the first gripping means 2 deliver the parisons or the unprocessed containers 4 to said processing station 101 and the second gripping means 3 draw the moulded or processed containers 5 from said processing station 101.

For example, the bottling plant 100 comprises said processing station 101, a feeding station 102 and an output station 103. The feeding station 102 bears the parisons or the unprocessed containers 4, the processing station 101, preferably of the rotary type, can process the parisons or the unprocessed containers 4 so as to obtain the moulded or processed containers 5, the output station 103 is able to receive the moulded or processed containers 5.

Originally, the first gripping means 2 are operatively active on the parisons or unprocessed containers 4 for transferring them from the feeding station 102 to the processing station 101. The second gripping means 3 are operatively active on the moulded or processed containers 5 for transferring them from the processing station 101 to the output station 103.

In the embodiment illustrated in figure 4, the feeding station 102 is a heating station for heating the parisons 4. The processing station 101 is a blow-moulding station of the rotary type provided with a plurality of moulds 104 receiving the parisons 4 from the first gripping means 2 and making available the moulded containers 5 to the second gripping means 3. Alternatively, the processing station 101 is a filling station or a labelling station. For example, the output station 103 serves for transferring the moulded containers 5 to a filling station or to a sterilizing station.

The method for transferring parisons and containers, according to the present invention, is described hereafter.

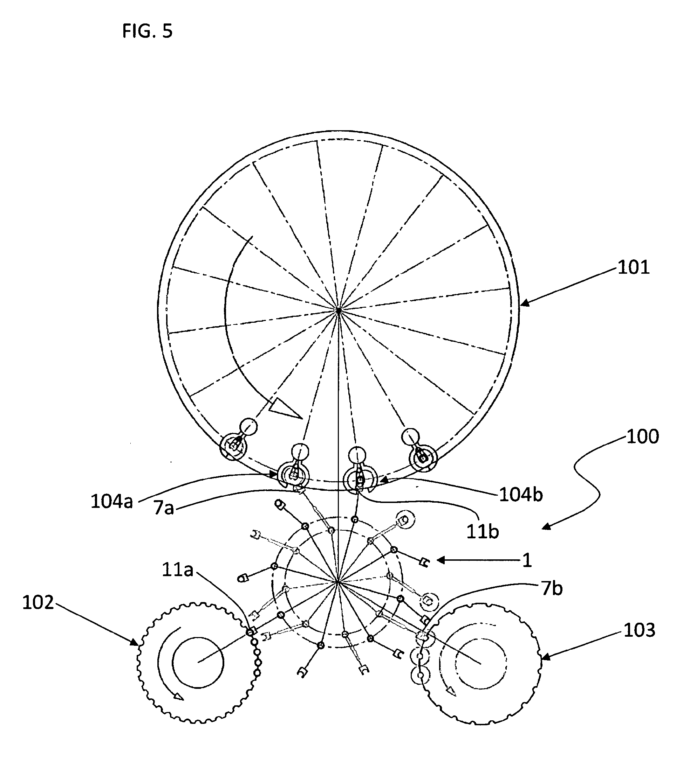

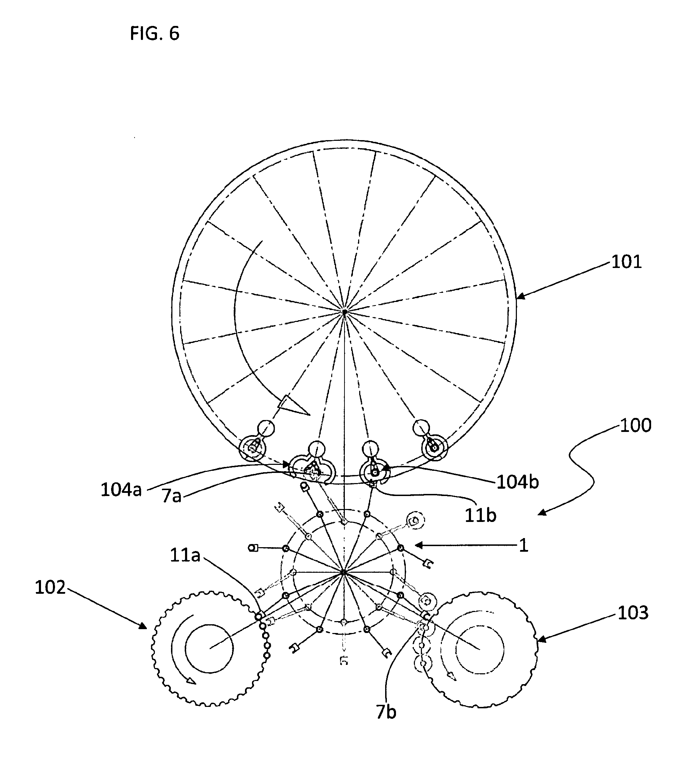

In figure 5, a situation frozen in a first time instant is shown. A gripper 11a of the first gripping means 2 is at the feeding station 102 and has the speed and pitch of the feeding station 102 itself. A gripper 7a of the second gripping means 3 is approaching a mould 104a of the processing station 101 and is gradually adjusting its speed to the speed of the processing station 101. Contemporaneously, another gripper 11b of the first gripping means 2, which is bearing a parison 4, delivers said parison 4 to another mould 104b of the processing station 101 and another gripper 7b of the second gripping means 3, which is bearing a container 5, delivers said container 5 to the output station 103. While the star-wheel 1 rotates, the first gripping means 2 and the second gripping means 3 change their positions according to figure 6, which is relative to a situation frozen in a second time instant. The gripper 11a of the first gripping means 2 draws a parison 4 from the feeding station 102. In the meantime, the gripper 7a of the second gripping means 3, which has reached the speed and pitch of the processing station 101, draws a container 5 from the corresponding mould 104a. Contemporaneously, the other gripper 11b of the first gripping means 2 is moving away from the processing station 101 and the other gripper 7b of the second gripping means 3 is moving away from the output station 103.

Then, during further rotation of the star-wheel 1, the transferring of parisons 4 and containers 5 go on continuously.

In substance, the steps of:
- drawing the parisons or unprocessed containers 4 from the feeding station 102;
- delivering the parisons or unprocessed containers 4 to the processing station 101;
- drawing the moulded or processed containers 5 from said processing station 101;
- delivering the moulded or processed containers 5 to the output station 103,
are all performed by the single transferring star-wheel 1.

From the above description, the characteristics of the transferring star-wheel, of the bottling plant and of the method for transferring parisons and containers, according to the present invention, are clear, as are their advantages.

In particular, thanks to the fact that the star-wheel bears two different types of gripping means, said star-wheel can perform both "delivering operations" and "drawing operations" on the same processing station. Indeed, the proposed transferring star-wheel is versatile and allows to simplify the whole structure of the bottling plant.

Moreover, since only one transferring star-wheel is employed for transferring objects (parisons/containers) among three stations (the feeding station, the processing station and the output station), the bottling plant is very compact and the dead angle is reduced, resulting in a considerable increasing (even 30%) in yeld of the process.

In prior art solutions, many attempts to reduce the distance between two transferring star-wheels were done. These attempts are overcome by the proposed solution since a single transferring star-wheel is employed.

## Claims

1. Transferring star-wheel (1) **characterised in that** it comprises:
first gripping means (2) operatively active on parisons or unprocessed containers (4) and second gripping means (3) operatively active on moulded or processed containers (5), said star-wheel (1) being approachable to a processing station (101) so that said first gripping means (2) deliver the parisons or the unprocessed containers (4) to said processing station (101) and said second gripping means (3) draw the moulded or the processed containers (5) from said processing station (101).

2. Star-wheel (1) according to claim 1, wherein said first gripping means (2) grip the parisons or unprocessed containers (4) by their neck or by their body.

3. Star-wheel (1) according to claim 1 or 2, wherein said second gripping means (3) grip the moulded or processed containers (5) by their neck or by their body.

4. Star-wheel (1) according any of the previous claims, wherein said first gripping means (2) are arranged on the star-wheel (1) so as to alternate with said second gripping means (3).

5. Star-wheel (1) according to any of the previous claims, wherein both first gripping means (2) and second gripping means (3) are hinged to the star-wheel (1) so that they can pivot around corresponding axis (6).

6. Star-wheel (1) according to claim 5, wherein the development of said first gripping means (2) or of said second gripping means (3) is extendable so that, with the star-wheel (1) in rotary motion, they define a closed profile.

7. Star-wheel (1) according to claim 6, wherein said first gripping means (2) or said second gripping means (3) have a pantograph structure.

8. Star-wheel (1) according to claim 6, wherein said first gripping means (2) or said second gripping means (3) comprise telescopic arms (9).

9. Bottling plant (100) comprising:
a feeding station (102) bearing parisons or unprocessed containers (4);
a processing station (101) for processing said parisons or unprocessed containers (4) so as to obtain moulded or
processed containers (5);
an output station (103) able to receive said moulded or
processed containers (5),
**characterised in that** it comprises a transferring star-wheel (1) according to any of the previous claims, said first gripping means (2) being operatively active on said parisons or unprocessed containers (4) for transferring them from the feeding station (102) to the processing station (101), said second gripping means (3) being operatively active on said moulded or processed containers (5) for transferring them from the processing station (101) to the output station (103).

10. Plant (1) according to claim 9, wherein said processing station (101) is a blow-moulding station provided with a plurality of moulds (104) receiving the parisons (4) from the first gripping means (2) and making avalaible the moulded containers (5) to the second gripping means (3).

11. Plant (1) according to claim 9 or 10, wherein said feeding station (102) is a heating station for heating said parisons (4).

12. Plant (1) according to claims 9 to 11, wherein said output station (103) serves for transferring the moulded or processed containers (5) to a filling station or to a sterilizing station.

13. Method for transferring parisons and containers (4, 5) comprising the following steps:
drawing parisons or unprocessed containers (4) from a feeding station (102);
delivering the parisons or unprocessed containers (4) to a processing station (101);
drawing moulded or processed containers (5) from said processing station (101);
delivering the moulded or processed containers (5) to an output station (103),
**characterised in that** all the above-mentioned steps are performed by a single transferring star-wheel (1) according to any of the previous claims.
